Europäisches Patentamt

European Patent Office     (11) Numéro de publication: **0 251 363**

Office européen des brevets                                **A1**

(19)

## (12) DEMANDE DE BREVET EUROPEEN

(21) Numéro de dépôt: **87200975.8**

(22) Date de dépôt: **29.05.87**

(51) Int. Cl.⁴: **A63H 33/08** , **F16B 7/04** , **A47B 3/12**

(30) Priorité: **20.06.86 BE 216816**

(43) Date de publication de la demande:
**07.01.88 Bulletin 88/01**

(84) Etats contractants désignés:
**AT BE CH DE ES FR GB GR IT LI LU NL SE**

(71) Demandeur: **INSTITUT D'ENSEIGNEMENT SPECIAL ASBL ATELIER PROTEGE "LES ERABLES"**
**rue du Saulchoir, 56**
**B-7540 Kain(BE)**

(72) Inventeur: **Delepaut, Christophe**
**rue Beyaert, 35**
**B-7500 Tournai(BE)**

(74) Mandataire: **Fobe, Edouard et al**
**Bureau VANDER HAEGHEN 63, Avenue de la Toison d'Or**
**B-1060 Bruxelles(BE)**

(54) **Construction tubulaire.**

(57) Construction tubulaire comprenant des éléments tubulaires se compénétrant ; elle comprend au moins un élément (dit structure de base) constitué d'un tube (1) (dit tube de base)à une extrémité duquel est enfilé coaxialement et fixé un manchon (2) (dit manchon gigogne)percé d'au moins un passage (6) traversant le manchon (2) de part en part suivant un axe perpendiculaire à l'axe longitudinal (7) commun au tube (1) et au manchon (2),et dont le diamètre est très voisin du diamètre extérieur d'un tube (1) de base.

Application au domaine des jouets et des constructions légères.

FIG.3

EP 0 251 363 A1

## CONSTRUCTION TUBULAIRE

L'invention concerne une construction tubulaire , notamment une construction tubulaire utilisable dans le domaine des jouets et dans le domaine des constructions légères.

L'emploi de constructions tubulaires, notamment dans les domaines susdits, est connu. Les constructions de ce genre utilisées à ce jour sont formées de tubes se compénétrant par leurs extrémités et réunis entre eux ,éventuellement, par des pièces coudées simples ou en forme de T.

Les constructions connues sont en général rigides, c'est-à-dire que leur structure d'ensemble, une fois constituée, est presque toujours indéformable. Elles utilisent habituellement des pièces spéciales telles que les coudes et les T dont il vient d'être question, pièces qui sont souvent compliquées en raison de leur mode d'assemblage conçu en fonction de la rigidité poursuivie.

La présente invention ne présente pas ces particularités, visant au contraire à obtenir, par des moyens très simples et uniformisés, des constructions variées, éventuellement déformables, et n'utilisant qu'un matériel réduit à des pièces de conception aussi simple que possible, et non spécifiques.

Suivant l'invention, il s'agit d'une construction tubulaire comprenant des éléments tubulaires se compénétrant et caractérisée en ce qu'elle comprend au moins un élément (dit structure de base) constitué d'un tube (dit tube de base) à une extrémité duquel est enfilé coaxialement et fixé un manchon (dit manchon gigogne) percé d'au moins un passage traversant le manchon de part en part suivant un axe perpendiculaire à l'axe longitudinal commun au tube et au manchon, et dont le diamètre est très voisin du diamètre extérieur d'un tube de base. Dans son ensemble, une construction suivant l'invention comprend plusieurs structures de base reliées entre elles par au moins un manchon gigogne. Le matériau constitutif préféré pour les éléments d'une construction suivant l'invention est le polychlorure de vinyle.

L'invention sera décrite ci-après dans trois formes de réalisation données à titre d'exemples, deux d'entre elles se rapportant au domaine des jouets et la troisième au domaine de la construction de pièces d'ameublement légères.

Sur les dessins joints au présent mémoire:

-la figure 1 est une vue en élévation latérale d'un élément de base suivant l'invention ;

-la figure 2 est une coupe axiale de l'élément de la figure 1, suivant la ligne II-II de la figure 1;

-la figure 3 est un exemple d'assemblage de deux éléments de base ;

-la figure 4 est une vue en élévation latérale d'un manchon gigogne ordinaire ;

-la figure 5 est une vue,analogue à celle de la figure 4, d'un manchon gigogne modifié et de deux goujons qui le traversent ;

-la figure 6 est une variante de la figure 5, montrant un manchon traversé par un seul goujon ;

-la figure 7 est une vue en perspective d'une structure représentant un basset légèrement incliné autour de l'axe de sa colonne vertébrale ;

-la figure 8 représente en perspective un chameau marchant ; et

-la figure 9 représente en perspective un ensemble articulé pouvant servir à la construction d'une table portative.

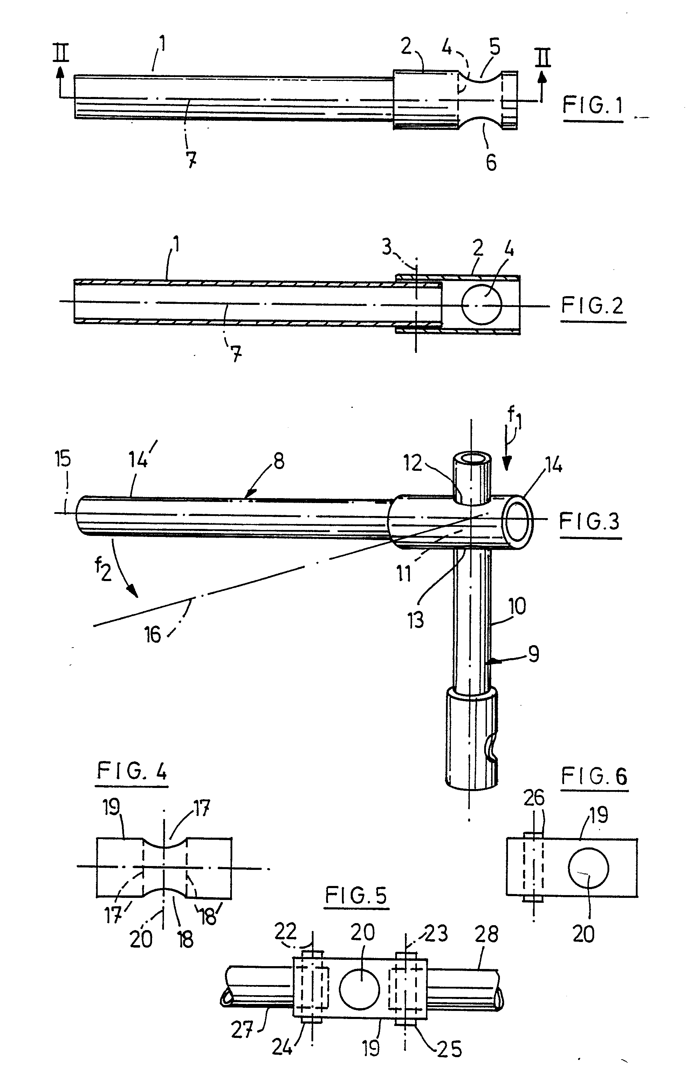

Sur les figures 1 et 2, on a désigné par 1 ce que l'on appellera un tube de base associé à un manchon 2 qui sera appelé manchon gigogne. Les tubes 1 et 2 sont assemblés l'un à l'autre par enfoncement d'une extrémité du premier dans une extrémité du second. Cet assemblage coaxial peut être plus ou moins rigide suivant que la liaison entre le tube 1 et le tube 2 est maintenue par le frottement plus ou moins important de ces tubes entre eux ou est maintenue par introduction d'un adhésif entre les extrémités coopérantes des deux tubes. Il est également possible de fixer plus définitivement le manchon 2 sur le tube 1 en faisant traverser ces deux pièces par une cheville d'axe 3 dont il sera question avec plus de détail à propos de la figure 5. Le manchon gigogne 2 est traversé par un "trou" passant de part en part du manchon 2, ce trou s'étendant comme un passage 4 qui s'étend entre deux forures 5 et 6 pratiquées l'une en face de l'autre dans les parois du manchon 2. L'axe du passage 4, que l'on appellera lui-même très souvent un trou dans le langage courant, est perpendiculaire à l'axe longitudinal 7 commun aux tubes 1 et 2. L'ensemble d'un tube de base et d'un manchon gigogne 2, tel que représenté aux figures 1 et 2, sera appelé dans la suite "structure de base".

La figure 3 représente en perspective l'assemblage de deux structures de base désignées respectivement par 8 et 9. Dans cet assemblage, le tube de base 10 de la structure de base 9 est enfoncé dans le passage 11 réalisé entre les forures 12 et 13 du manchon gigogne 14 appartenant à la structure de base 8. Si les diamètres respectifs du tube 10 et des forures 12 et 13 sont choisis judicieusement, leurs diamètres sont assez voisins pour impliquer un frottement sec de l'emboîtage, les structures de base 8 et 9 pourront être déplacées l'une par rapport à l'autre de deux façons différentes, soit par un enfoncement plus ou moins marqué de l'une des structures dans l'autre suivant la flèche f1 ; soit suivant une rotation de la structure 8 autour de l'axe longitudinal de la structure 9, comme indiqué par la flèche f2 qui marque le sens d'un déplacement angulaire de l'axe 15 du tube 14, venant occuper la position indiquée par 16. Cette disposition permettra de réaliser toutes sortes de mouvements dans des constructions plus compliquées comportant un certain nombre de structures de base.

Sur la figure 4, on a indiqué, par des pointillés 17', 18' reliant entre elles les forures opposées 17 et 18 d'un manchon 19, les limites théoriques d'un passage 20. L'axe longitudinal du passage 20 (caché) est perpendiculaire à l'axe longitudinal 21 du manchon 19. La construction ainsi réalisée, appelée "manchon gigogne", est la plus simple de l'espèce. Sur la figure 5, on a représenté une construction plus compliquée dans laquelle deux passages représentés par leurs axes 22 et 23 sont pratiqués symétriquement de part et d'autre de l'axe du passage 20 de l'objet de la figure précédente. Dans ces passages 22 et 23 sont enfoncées des chevilles cylindriques creuses, 24 et 25 respectivement, chevilles qui seront appelées dans la suite des "goujons". L'objet de la figure 5 peut être simplifié, par l'emploi d'un seul goujon 26. Les objets des figures 4, 5 et 6 seront tous appelés "manchons gigognes".

Le manchon gigogne représenté à la figure 5 permet de réunir deux tubes de base 27 et 28 placés coaxialement l'un en face de l'autre. Si l'on introduit alors dans le passage 20 d'un tel manchon un autre tube de base (non montré sur la figure), on obtiendra une pièce composite réalisant un T. La construction ainsi obtenue se prête à beaucoup plus d'applications que les T habituels des constructions antérieures puisque le montant du T traversant le passage 20 sera déplaçable par rapport à sa barre transversale 19.

L'ensemble des éléments qui viennent d'être décrits, comprenant des structures de base, des tubes de base, des manchons gigognes de l'une ou l'autre espèce et éventuellement des goujons permettra de réaliser un nombre considérable de constructions dont les éléments pourront éventuellement être solidarisés en certains points (par collage ou autrement) et laissés libres avec un degré de liberté conditionné par le frottement relatif entre les différentes pièces.

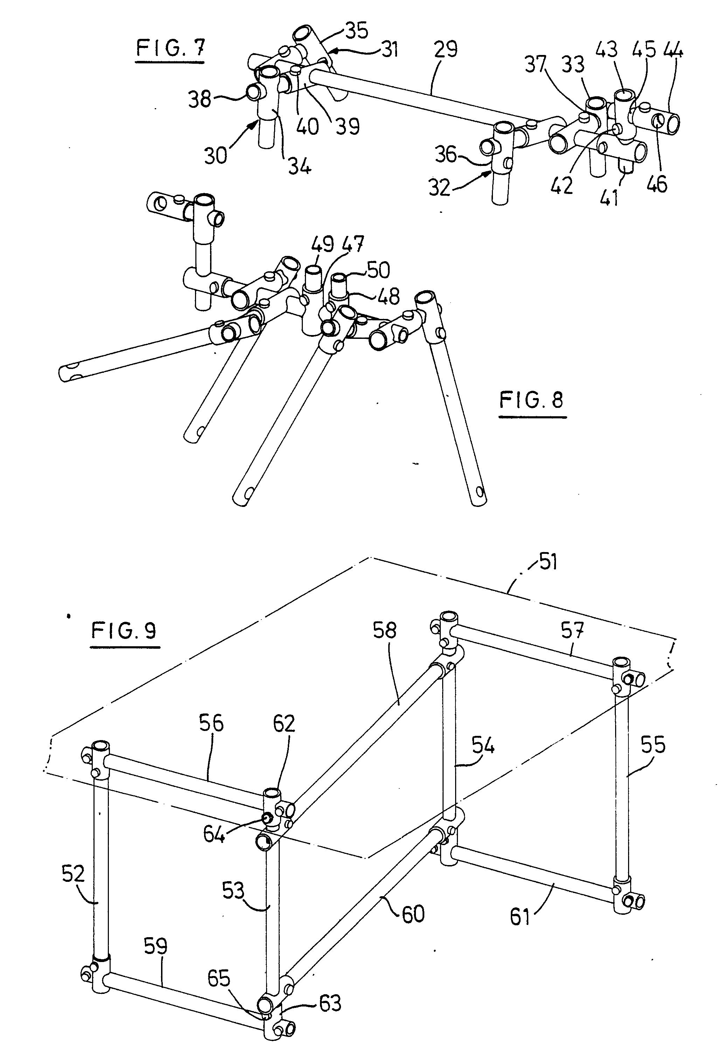

Trois constructions de ce genre sont représentées à titre d'exemples sur les figures 7, 8 et 9.

La construction représentée à la figure 7 simule un basset dont le corps est représenté par un tube relativement long 29 et dont les pattes 30,31,32,33 sont des tubes de base de courte longueur , enfoncés dans des manchons gigognes 34,35,36,37 respectivement, appartenant chacun au type de la figure 6. Le corps supérieur des pattes, c'est-à-dire le corps des cuisses , est constitué chaque fois de deux tubes coaxiaux tels que 38, 39 assemblés rigidement par chaque fois un goujon tel que 40. La partie supérieure des pattes (par exemple le tube 39) est reliée au corps 29 du chien par le passage de ce dernier dans le trou principal du manchon gigogne correspondant, soit par exemple 39. Si la liaison entre le tube 34 et le tube 38 se fait à frottement doux et s'il en est de même de la liaison entre le tube 39 du haut d'une patte et le tube 29 du corps, il sera possible de donner deux degrés de liberté au mouvement des pattes du chien par rapport à son corps et en donnant aux divers éléments des positions appropriées, on pourra, par des gestes très simples, simuler la marche du chien sur un terrain quelconque. Pour être complet, il convient d'ajouter que le cou du chien peut être réalisé par un tube de base 41 de faible longueur, assemblé par un goujon 42 à un manchon 43. Le cou 41, 43 porte la tête réalisée par un manchon gigogne 44 du type de la figure 6, assemblé au cou 43 par un tube de base de faible longueur 45. La gueule du chien apparaîtra à l'extrémité du tube 44 et ses yeux pourront être figurés par de bouchons de couleurs vives (non montrés) enfoncés dans les forures opposées du passage transversal 46 du manchon gigogne 44.

La figure 8 représente un chameau dont la structure est absolument analogue à celle du chien de la figure 7. Pour la simplicité, les divers éléments du chameau n'ont pas été affectés de numéros de référence, à l'exception de deux manchons gigognes 47 et 48 surmontés de tubes de base 49 et 50 qui représentent dans leur ensemble les bosses du chameau. La figure 8 qui représente un animal dont les pattes sont très longues permet de mettre facilement en évidence le mouvement de la marche du chameau, que l'on peut simuler en inclinant les pattes du chameau par rapport à son corps.

La figure 9 est un élément structurel, non animal, et qui peut constituer par exemple les pieds d'une table portative dont le plateau a été représenté schématiquement par un contour en traits mixtes repéré par 51. On voit sur la figure 9 que la structure ainsi imaginée comporte quatre montants 52,53,54,55 parallèles entre eux et destinés à être posés verticalement. Ces montants sont reliés entre eux à leur partie supérieure par des traverses 56,57,58 et à leur partie inférieure par des traverses 59,60,61. Tous les montants sont constitués par des structures de base à deux extrémités symétriques, c'est-à-dire que les tubes de base qui les constituent (tels que le tube de base 53) portent chaque fois à leurs deux extrémités des manchons gigognes tels que 62,63 fixés au tube de base vertical (tel que 53) par des goujons tels que 64 et 65 respectivement.

Par des rotations convenables autour des axes longitudinaux des tubes 52,53,54 et 55, il est possible de ramener l'ensemble de la construction à une forme voisine de celle d'un plan, tandis que des rotations en sens contraire permettent de donner à l'ensemble la forme d'une construction en Z plus ou moins étendue suivant la grandeur du plateau qu'elle doit supporter.

Bien que les divers éléments d'une construction suivant l'invention soient tous rectilignes, il est possible de réaliser avec eux des contours polygonaux à côtés de faible longueur mais en nombre assez grand pour simuler des courbes auxquelles les éléments rectilignes constitueraient des tangentes successives. En superposant dans l'espace et à distance les uns des autres plusieurs contours polygonaux fermés de ce genre, on peut même simuler des formes sphériques ou approchantes, ce qui permettra de représenter des volumes, car l'oeil envisage facilement les surfaces courbes qui les enveloppent. Un jouet constitué de cette façon pourra représenter par exemple un aéronef, ballon captif ou dirigeable.

Les constructions réalisées suivant l'invention et dont les éléments essentiels sont des structures de base, des tubes de base et des manchons gigognes pourront être complétées (comme c'est le cas de la table dont les pieds sont représentés à la figure 9), par des plateaux tels que le plateau 51 ou d'autres plateaux percés de trous , qui pourrant constituer des écrans, etc. Des disques de matière quelconque, percés d'un trou central d'un diamètre légèrement suprérieur au diamètre extérieur d'un tube de base , pourront constituer des roues et il sera possible alors de réaliser des modèles de constructions complètes , tels que des modèles de camions à benne fixe ou levante, etc.

On voit que dans le domaine du jouet notamment, l'invention permet de réaliser un nombre considérable d'objets différents qui pourront avoir un caractère dynamique en quelque sorte, du fait de la mobilité relative de leurs divers éléments, ce qu'aucun jeu de construction connu à ce jour ne semble avoir pu réaliser.

Les constructions légères dont il a été fait mention précédemment comme de l'une des applications possibles de l'invention doivent s'entendre de façon très générale, c'est-à-dire qu'elles peuvent comprendre aussi bien des structures propres à représenter des objets géométriques, ce qui permet d'étendre l'invention au domaine de l'enseignement et même de la recherche scientifique. On peut envisager encore la réalisation de modèles architecturaux, etc.

## Revendications

1.-Construction tubulaire comprenant des éléments tubulaires se compénétrant, caractérisée en ce qu'elle comprend au moins un élément (dit structure de base) constitué d'un tube (dit tube de base) à une extrémité duquel est enfilé coaxialement et fixé un manchon (dit manchon gigogne) percé d'au moins un passage traversant le manchon de part en part suivant un axe perpendiculaire à l'axe longitudinal commun au tube et au manchon, et dont le diamètre est très voisin du diamètre extérieur d'un tube de base.

2.-Construction tubulaire suivant la revendication 1, caractérisée en ce qu'elle comprend plusieurs tubes de base reliés entre eux par au moins un manchon gigogne.

3.-Construction tubulaire suivant la revendication 2, caractérisée en ce que certains au moins des éléments - structures de base, manchons gigognes -qu'elle comprend sont reliés entre eux par des chevilles tubulaires dites goujons, propres à passer par des trous de diamètre très voisin du diamètre extérieur des goujons et forés respectivement dans les manchons gigognes et dans les tubes appelés à coopérer avec eux.

4.-Construction tubulaire suivant les revendications 2 et 3, caractérisée en ce que les manchons gigognes percés chaque fois d'un passage principal de diamètre très voisin du diamètre extérieur d'un tube de base , sont percés en outre d'au moins un passage supplémentaire traversant le manchon de part en part, dont l'axe est perpendiculaire à l'axe du passage principal.

5.-Construction tubulaire suivant la revendication 4, caractérisée en ce que le diamètre intérieur de chaque passage supplémentaire est très voisin du diamètre extérieur d'un goujon.

6.-Construction tubulaire suivant les revendications 4 et 5, caractérisée en ce les manchons gigognes comprennent au moins deux passages supplémentaires disposés symétriquement par rapport à l'axe du passage principal.

7.-Construction tubulaire suivant la revendication 6, caractérisée en ce que certains au moins des manchons gigognes qui en font partie présentent plusieurs passages supplémentaires dont les axes, perpendiculaires à l'axe longitudinal du manchon, forment entre eux des angles aigus.

8.-Construction tubulaire suivant l'une quelconque des revendications précédentes, caractérisée en ce que certains au moins des tubes qui la constituent en se compénétrant sont fixés les uns aux autres par le frottement qui règne entre eux.

9.-Construction tubulaire suivant l'une quelconque des revendications 2 à 7, caractérisée en ce que certains au moins des tubes qui la constituent en se compénétrant sont fixés les uns aux autres par collage.

10.-Construction tubulaire suivant l'une quelconque des revendications précédentes, caractérisée en ce que les tubes (de base, manchons, goujons) sont en polychlorure de vinyle.

11.-Construction tubulaire suivant une ou plusieurs des revendications précédentes, considerée dans son application au domaine des jouets.

12.-Construction tubulaire suivant l'une quelconque des revendications 1 à 10, considerée dans son application aux constructions légères.

FIG.1

FIG.2

FIG.3

FIG.4

FIG.5

FIG.6

FIG. 7

FIG. 8

FIG. 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| X | FR-A- 471 838 (HORNBY) <br> * En entier * | 1-12 | A 63 H 33/08 <br> F 16 B 7/04 <br> A 47 B 3/12 |
| P,X | BE-A- 904 972 (LES ERABLES) <br> * En entier * | 1-12 | |
| A | FR-A-2 334 866 (ZEITWOOG) <br> * Page 3, lignes 14-21 * | 8 | |
| A | DE-A-2 720 641 (REOBYN) | | |
| A | BE-A- 547 477 (LAROCHE) | | |

DOMAINES TECHNIQUES
RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 09-10-1987 | VAN DER WAL W |